# EUROPÄISCHE PATENTSCHRIFT

(11) **EP 0 794 916 B1**
(45) Veröffentlichungstag und Bekanntmachung des Hinweises auf die Patenterteilung: **07.04.1999**
(21) Anmeldenummer: 95938346.4
(22) Anmeldetag: 23.11.1995
(51) Int. Cl.: B65H 3/06, B65H 1/24, A47G 23/032, A47J 31/08

(54) **SPENDER FÜR EINZELBLÄTTER AUS FLEXIBLEM MATERIAL**
DISPENSER OF INDIVIDUAL SHEETS MADE OF FLEXIBLE MATERIAL
DISTRIBUTEUR DE FEUILLES INDIVIDUELLES EN MATIERE SOUPLE

(30) Priorität: 02.12.1994 DE 4442880
(43) Veröffentlichungstag der Anmeldung: 17.09.1997
(73) Patentinhaber: Pöhler, Herbert, 63639 Flörsbach (DE)
(72) Erfinder: Pöhler, Herbert, 63639 Flörsbach (DE)
(74) Vertreter: Pöhner, Wilfried Anton, Dr.
(86) Internationale Anmeldenummer: DE9501678
(87) Internationale Veröffentlichungsnummer: WO9616886

(56) Entgegenhaltungen:
- EP-A- 0 590 679
- WO-A-88/02735
- DE-B- 1 007 203
- DE-U- 8 813 903
- GB-A- 2 074 548
- PATENT ABSTRACTS OF JAPAN vol. 4, no. 68 (M-012), 21.Mai 1980 & JP,A,55 031755 (RICOH CO LTD), 6.März 1980,

## Beschreibung

Die Erfindung bezieht sich auf einen Spender für einzelne Blätter aus flexiblem Material, insbesondere Pilsdeckchen, Kaffeedeckchen, Kaffeefilter o. ä., der einen im wesentlichen vertikalen Schacht aufweist, in den die Blätter von oben als Stapel eingesetzt sind, die Blätter auf zwei aufgerauhten Walzen aufsitzen, die zueinander parallel sind und deren Achsen im wesentlichen in der Horizontalen verlaufen, im Bereich zwischen den beiden Walzen ein Fühler vorhanden ist, der Schacht auf Höhe des untersten, auf den Walzen aufliegenden Blattes einen radialen und in Transportrichtung der Blätter befindlichen Schlitz aufweist, im Bereich des Schlitzes außerhalb des Schachtes eine Lichtschranke vorhanden ist, die ein aus dem Schlitz herausragendes Blatt detektiert und die Walzen mit einem Antrieb und einer dazugehörenden Steuerung in Verbindung stehen.

Die Druckschrift EP 0 590 679 A1 beschreibt eine derartige, gattungsgemäße Fördervorrichtung, die zur Abgabe einzelner Blätter aus einem Stapel dient und beispielsweise als Zuführvorrichtung einer Druckmaschine geeignet ist. Die Förderung erfolgt dabei durch Betätigung des Antriebs der Vorrichtung. Für viele Anwendungen, etwa in der Gastronomie, ist eine derartige Fördervorrichtung jedoch ungeeignet, wenn infolge fließbandartiger Arbeitsabläufe nach dem Entnehmen eines Blattes keine Zeit zur Antriebsbetätigung besteht.

Sogenannte Pils- und Kaffeedeckchen finden in der Gastronomie häufige Verwendung und werden um den Ständer sogenannter Tulpen-Biergläser bzw. unter Kaffeetassen gelegt. Sie dienen dazu, eventuell überlaufendes oder überschwappendes Getränk aufzusaugen und werden übereinandergestapelt bereitgehalten. Die eine zentrale Öffnung und einen Einführungsschlitz aufweisenden Pilsdeckchen werden oftmals zusätzlich durch einen kreiszylinderförmigen Dorn gehalten, der innerhalb der Öffnungen verläuft.

Eine ähnliche Form wie die Deckchen besitzen die bekannten, kreisrunden Filterpapiere für Gastronomie-Kaffeemaschinen. All diese Papiere weisen den Nachteil auf, daß sie vom Stapel nur sehr schwer einzeln zu fassen sind. Außerdem kleben die Blätter manchmal zusammen, insbesondere dann, wenn sie versehentlich durch Tropfen benetzt wurden, was vor allen Dingen im Schankbetrieb oft vorkommt. Das Entnehmen einzelner Blätter stellt folglich in der Praxis eine aufwendige und vor allen Dingen beim fließbandartigen Zapfen von Bier nervenaufreibende Arbeit dar. Das Personal ist daher oftmals versucht, den Finger mit Speichel etwas anzufeuchten, um die Entnahme eines Blattes oder eines Kaffeefilters zu erleichtern. Aus hygienischen Gründen ist dies, insbesondere beim Kaffeefilter, bedenklich. Vergleichbare Probleme bestehen bei allen flexiblen Folien und Blättern, die einzeln von einem Stapel abzunehmen sind, z. B. Papierzettel oder Visitenkarten, wobei die hygienischen Anforderungen speziell im medizinischen Bereich, etwa bei Tupfern oder Verbandmaterial zur Anwendung bei offenen Wunden, sehr hoch sind.

Demgegenüber liegt der Erfindung das Problem zugrunde, einen Spender anzugeben, aus dem Blätter, Folien oder Kaffeefilter leicht einzeln entnommen werden können.

Erfindungsgemäß wird das Problem dadurch gelöst, daß, die Steuerung die Walzen so steuert, daß sich bei geschlossener Lichtschranke die erste, vom Schlitz entfernte Walze so dreht, daß sich der obere Abschnitt der Mantelfläche Richtung Schlitz bewegt und hierbei das darauf aufliegende Blatt mitführt und die zweite, dem Schlitz nahe Walze solange stillsteht, bis das unterste Blatt den Fühler berührt, woraufhin sich dann die zweite Walze im gleichen Drehsinn wie zuvor die erste Walze in Bewegung setzt und die erste Walze abstoppt bis nach einer Unterbrechung der Lichtschranke beide Walzen stillstehen.

Das wesentliche der Erfindung ist, die Walzen so anzutreiben, daµ sie sukzessive immer nur ein einziges Blatt, z. B. ein Deckchen aus dem Schlitz fördern. Die Blätter oder Folien können aus einem beliebigen, flexiblem Material bestehen, insbesondere Papier oder einem Kunststoff. Nachdem die Lichtschranke die Entnahme des aus dem Schlitz herausragenden Blattes detektiert hat, wird zunächst die erste Walze angetrieben, woraufhin sich das Blatt zwischen den beiden Walzen unter dem Einfluß der Schwerkraft nach unten wölbt. Kurz bevor das unterste Blatt den Kontakt zur ersten Walze verliert, berührt es den Fühler zwischen den beiden Walzen, woraufhin die Bewegung der ersten Walze stoppt und sich die zweite Walze zu drehen beginnt. Das Blatt wird solange aus dem Schlitz herausbewegt, bis es den Strahl der Lichtschranke unterbricht, was zu einem Stillstand beider Walzen führt. Dieser Ablauf beginnt wieder von neuem, wenn das Blatt entnommen und dadurch die Lichtschranke geschlossen wird. Die Vorteile der Erfindung sind vor allen Dingen darin zu sehen, daß die einzelne Entnahme der Blätter einfach und schnell möglich ist. Geeignete Anwendungsbereiche sind die Gastronomie, z. B. für Pilsdeckchen, Kaffeedeckchen, Kaffeefilter etc., sowie aufgrund der hygienischen Anforderungen der medizinische Bereich, beispielsweise als Spender für blattförmiges Abdeckmaterial. Denkbar ist jedoch auch ein Einsatz als Spender für Visitenkarten, runde oder eckige Papierzettel, Folien und ähnliche Schreibwaren.

Um stets einen für die Funktionssicherheit wichtigen Reibschluß zwischen Blatt und Walzen zu garantieren, empfiehlt sich, die in dem Spender aufeinandergestapelten Blätter durch ein oben aufliegendes Gewicht nach unten gegen die Walzen zu drücken, welche etwas aufgerauht sind, um die Haftung zu den Blättern zu verbessern.

Da immer nur eine Walze in Betrieb ist, weist eine bevorzugte Ausgestaltung der Erfindung einen einzigen Antrieb auf, der im Funktionsablauf von der einen zur anderen Walze umgeschalten wird.

Die Wahrscheinlichkeit des Herausschiebens mehrerer aneinander hängender Blätter kann durch eine Stütze noch weiter vermindert werden, die im schlitzfernen Bereich die Blätter etwas über die erste Walze anhebt, kurz nachdem sie sich zu drehen begonnen hat. Da das unterste Blatt schon so weit von der ersten Walze bewegt wurde, daß es nicht mehr von der Stütze erfaßt werden kann, werden nur die darüberliegenden Blätter angehoben, hierdurch der Reibschluß unterbrochen, was zu einer Separierung der beiden unteren Blätter führt. Die Auslösung der Aufwärtsbewegung der Stütze kann insbesondere dann ausgelöst werden, wenn das unterste Blatt den Fühler berührt, dann also wenn die erste Walze abstoppt und die zweite in Bewegung gesetzt wird.

Vorteilhafterweise ist die Stütze an ihrem oberen Ende spitz, wodurch sie etwas in die Blätter eingreift und somit ein Fortbewegen in horizontaler Richtung verhindert. Das gleiche Ergebnis läßt sich dadurch erreichen, daß das obere Ende der Stütze angerauht ist und zur Fixierung des untersten Blattes des Stapels beiträgt.

Bei Pilsdeckchen ist bevorzugt, daß ein Dorn in der Mitte und längs des Schachtes verläuft, der durch die zentralen Öffnungen der Pilsdeckchen greift. Damit die Deckchen aus dem Schlitz herausgefördert werden können, müssen sie so eingelegt werden, daß ihr Einführungsschlitz nach hinten zur ersten Walze gerichtet ist. Da die Deckchen wegen der zentralen Öffnung einen in der Mitte zwischen den Walzen gelegenen Fühler nicht auslösen können, sind zwei der Abhilfe dienende Maßnahmen denkbar. Zum einen kann ein Fühler eingesetzt werden, dessen Breite so gewählt ist, daß sie die zentrale Öffnung des Deckchens überbrückt. Die Alternative besteht darin, zwei Fühler vorzusehen, die sich jeweils nach verschiedenen Seiten der Mittelebene zwischen den beiden Walzen befinden. Der Dorn hat den Vorteil, daß die Deckchen in dem Schacht definiert ausgerichtet sind. Bekanntlich weisen Pilsdeckchen einen von der zentralen, der Aufnahme des Fußes der Pilstulpe dienenden Öffnung ausgehenden radialen Schlitz auf, der bis zur Außenberandung reicht. Der Schlitz ist zum Einfädeln des Fußes der Pilstulpe in das Deckchen unabdingbar. Zum Abziehen des untersten Deckchens sollte bei Verwendung eines zentrierenden und den Stapel durchgreifenden Dornes der Schlitz in Bewegungsrichtung des Deckchens und zwar in Richtung auf die erste Walze zu, ausgerichtet sein. Mitunter mag es genügen, die Füllung des Schachtes in präziser Orientierung des Pilsdeckchens vorzunehmen. Demgegenüber bevorzugt ist jedoch, einen parallel zur Mittelachse des Stapels und den Schlitz der Pilsdeckchen durchgreifenden Führungsdraht anzuordnen, der dafür Sorge trägt, daß stets die Ausrichtung im vorbeschriebenen Sinne sichergestellt ist.

Zweckmäßigerweise ist der Dorn am Gewicht befestigt und wird nach dem Einlegen der Deckchen von oben über diese gestülpt. Eine Befestigung am Schachtboden wäre wegen der dort befindlichen Fühler und Walzen aufwendiger.

Vorteilhafterweise erfährt die erste Walze nach Beendigung ihrer Drehung eine Arretierung, damit sie nicht durch die Bewegung des Blattes aus dem Schacht mitbewegt wird und hierdurch bereits zu einer verfrühten Förderung des zweituntersten Blattes führen würde.

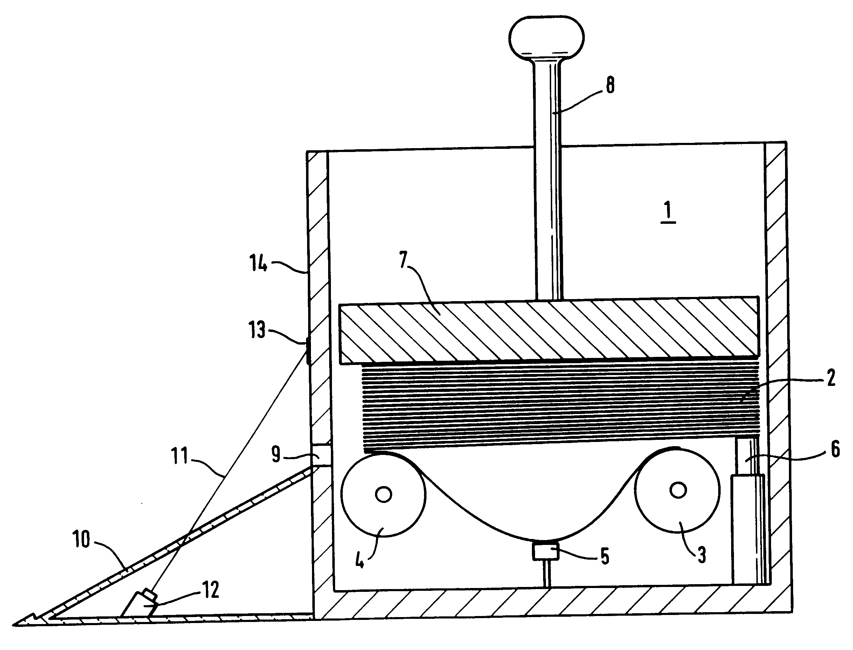

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird.

Die Zeichnung zeigt einen erfindungsgemäßen Spender, der einen zylinderförmigen Schacht (1) aufweist, in dem Blätter (2) aufeinandergestapelt eingesetzt sind. Das unterste Blatt sitzt auf zwei Walzen (3, 4) auf und ist nach unten bis zu einem Fühler (5) durchgebogen, der sich in der Mitte zwischen den beiden Walzen (3, 4) befindet. Die darüberliegenden Blätter (2) sind von einer vertikal ausfahrbaren Stütze (6) etwas über die erste, in der Zeichnung rechts befindlichen Walze (3) abgehoben und werden von einem Gewicht (7) mit nach oben aus dem Schacht (1) herausragenden Griff (8) nach unten gedrückt. Rechts der zweiten Walze (4) befindet sich auf Höhe des untersten Blattes (2) ein horizontaler Schlitz (9) im Schacht (1). Links dieses Schlitzes (9) schließt sich eine Präsentationsplatte (10) an, die von einem Strahl (11) einer Lichtschranke durchdrungen wird. Die Quelle (12) der Lichtschranke befindet sich unterhalb der Präsentationsplatte (10), der Detektor (13) befindet sich an der linken Außenwand (14) des Spenders.

Die Funktionsweise ist wie folgt: Durch die aus Quelle (12) und Detektor (13) bestehende Lichtschranke, zwischen denen der Strahl (11) verläuft, wird das Wegnehmen eines Blattes von der Präsentationsplatte (10) erfaßt. Daraufhin wird über den hier nicht gezeigten Antrieb die Walze (3) in Bewegung gesetzt, wobei das unterste Blatt sich unter dem Einfluß der Schwerkraft nach unten und zwar etwa zwischen den beiden Walzen (3, 4) durchwölbt. Hierbei wird nach einem gewissen Drehwinkel der Fühler (5) kontaktiert, was zur Folge hat, daß einerseits die Walze (3) in ihrer Bewegung unterbrochen wird und zum anderen die Walze (4) in Bewegung gesetzt wird. Die geometrischen Abmessungen sollten etwa so bemessen sein, daß kurz vor oder gerade beim Verlassen der Walze (3) das Blatt den Fühler (5) berührt.

Anschließend wird die Walze (4) in Bewegung gesetzt und das Blatt über den Schlitz (9) nach außen auf den Präsentationsplatte gefördert. Der Strahl (11) wird unterbrochen und damit auch die Walze (4) zum Stillstand gebracht. Das Blatt steht nunmehr auf der Präsentationsplatte (10) zur Entnahme bereit. Sobald dieses Blatt entnommen wird, wird über den Strahl (11) der soeben beschriebene Vorgang erneut gestartet. Durch das Gewicht (7) wird der Stapel der Blätter (2) im Schacht (1) nach unten bewegt und eine Anlage an die Walze (3, 4) sichergestellt. Die vertikal ausfahrbare Stütze (6) dient dazu, bei erfolgter Entnahme des untersten Blattes mit Hilfe Walze (3) nach oben auszufahren und den darüber befindlichen Stapel zumindest im Bereich der Walze (3) soweit anzuheben, daß der Reibschluß unterbrochen wird. Die Stütze (6) ist eine zusätzliche Maßnahme der Separierung der einzelenen Blätter voneinander. Im Ergebnis erhält man eine Vorrichtung, mit deren Hilfe Kaffeedeckchen, Kaffeefilter, Pilsdeckchen separiert, rasch entnommen und in der Gastronomie eingesetzt werden können.

## Patentansprüche

1. Spender für einzelne Blätter aus flexiblem Material, insbesondere Pilsdeckchen, Kaffeedeckchen, Kaffeefilter o. ä, der einen im wesentlichen vertikalen Schacht (1) aufweist, in den die Blätter (2) von oben als Stapel eingesetzt sind, die Blätter (2) auf zwei aufgerauhten Walzen (3, 4) aufsitzen, die zueinander parallel sind und deren Achsen im wesentlichen in der Horizontalen verlaufen, im Bereich zwischen den beiden Walzen (3, 4) ein Fühler (5) vorhanden ist, der Schacht (1) auf Höhe des untersten, auf den Walzen (3, 4) aufliegenden Blattes (2) einen radialen und in Transportrichtung der Blätter (2) befindlichen Schlitz (9) aufweist, im Bereich des Schlitzes (9) außerhalb des Schachtes (1) eine Lichtschranke vorhanden ist, die ein aus dem Schlitz (9) herausragendes Blatt (2) detektiert und die Walzen (3, 4) mit einem Antrieb und einer dazugehörenden Steuerung in Verbindung stehen, **dadurch gekennzeichnet,** daß die Steuerung die Walzen (3, 4) so steuert, daß sich bei geschlossener Lichtschranke die erste, vom Schlitz (9) entfernte Walze (3) so dreht, daß sich der obere Abschnitt der Mantelfläche Richtung Schlitz (9) bewegt und hierbei das darauf aufliegende Blatt (2) mitführt und die zweite, dem Schlitz (9) nahe Walze (4) solange stillsteht, bis das unterste Blatt (2) den Fühler (5) berührt, woraufhin sich dann die zweite Walze (4) im gleichen Drehsinn wie zuvor die erste Walze (3) in Bewegung setzt und die erste Walze (3) abstoppt bis nach einer Unterbrechung der Lichtschranke beide Walzen (3, 4) stillstehen.

2. Spender nach Anspruch 1, **dadurch gekennzeichnet**, daß auf den Blättern (2) ein Gewicht (7) aufliegt.

3. Spender nach Anspruch 1 oder 2, **gekennzeichnet durch** einen gemeinsamen Antrieb für beide Walzen (3, 4), der zwischen den Walzen (3, 4) umschaltbar ist.

4. Spender nach einem der vorhergehenden Ansprüche, **gekennzeichnet durch** eine vertikal bewegliche Stütze (6), die hochfährt, kurz nachdem die erste Walze (3) sich zu drehen begonnen hat, vorzugsweise dann, wenn das Blatt (2) den Fühler (5) berührt, und die Blätter (2) in hochgefahrener Position geringfügig über die erste Walze (3) anhebt.

5. Spender nach Anspruch 4, **dadurch gekennzeichnet,** daß die Stütze (6) an ihrem oberen Ende spitz oder angerauht ist.

6. Spender nach einem der vorhergehenden Ansprüche, insbesondere zur Verwendung für Pilsdeckchen, **dadurch gekennzeichnet,** daß koaxial zum Schacht (1) ein Dorn verläuft und daß entweder ein breiter, die zentrale Öffnung überdeckender Fühler (5) oder zwei Fühler (5) vorhanden sind, wovon sich einer nahe der ersten (3) und der andere nahe der zweiten Walze (4) befindet.

7. Spender nach einem der vorhergehenden Ansprüche, insbesondere zur Verwendung für Pilsdeckchen, **dadurch gekennzeichnet,** daß parallel zur Mittelachse des Stapels und dem Schlitz (9) gegenüber ein den Stapel im Bereich des Schlitzes der Pilsdeckchen durchgreifender Führungsdraht angeordnet ist.

8. Spender nach Anspruch 6 oder 7, **dadurch gekennzeichnet,** daß der Dorn am Gewicht (7) befestigt ist.

9. Spender nach einem der vorhergehenden Ansprüche, **dadurch gekennzeichnet,** daß die erste Walze (3) nach dem Auslösen des Fühlers (5) bis zu einer erneuten Drehung arretiert ist.

## Claims

1. Dispenser for individual sheets of flexible material, in particular Pils doilies, coffee doilies, coffer filters or similar, which has an essentially vertical shaft (1) into which the sheets (2) are inserted from above as a stack, sheets (2) rest on two roughened rollers (3, 4), which are parallel to each other and whose axes extend essentially horizontally, in the region between the two rollers (3, 4) a sensor (5) is provided, shaft (1) has a radial slot (9) in the transport direction of sheets (2) at the level of the bottom sheet (2) resting on rollers (3, 4), in the region of slot (9) outside shaft (1) a light barrier is provided which detects a sheet (2) projecting out of slot (9) and rollers (3, 4) are connected to a drive and an associated control, **wherein** said control controls rollers (3, 4) in such a way that when the light barrier is closed the first roller (3), which is remote from slot (9), turns in such a way that the top section of the surface area moves in the direction of said slot (9) and thereby carries sheet (2) resting thereupon and the second roller (4), which is proximate to said slot (9), is stationary for the period until bottom sheet (2) contacts said sensor (5), whereupon second roller (4) moves in the same direction of rotation as previously first roller (3) and first roller (3) stops until after an interruption of the light barrier both rollers (3, 4) are stationary.

2. Dispenser according to claim 1, **wherein** a weight rests on said sheets (2).

3. Dispenser according to claim 1 or 2, **wherein** there is common drive for the two rollers (3, 4), which can be switched between said rollers (3, 4).

4. Dispenser according to one of the preceding claims, **wherein** there is a vertically movable support (6), which travels upward shortly after said first roller (3) has started to turn, preferably then when said sheet (2) comes into contact with said sensor (5), and in the extended position lifts said sheets (2) slightly over said first roller (3).

5. Dispenser according to claim 4, **wherein** said support is pointed or roughened at its top end.

6. Dispenser according to one of the preceding claims, in particular for use for Pils doilies, **wherein** coaxially to said shaft (1) a mandrel extends and either a wide sensor (5) is provided which covers the central opening or two sensors (5), one of which is located proximate to the first (3) and the other proximate to the second roller (4).

7. Dispenser according to one of the preceding claims, in particular for use for Pils doilies, **wherein** parallel to the centre axis of the stack and opposite said slot (9) a guide wire is disposed which penetrates the stack in the region of the slot of the Pils doilies.

8. Dispenser according to claim 6 or 7, **wherein** said mandrel is affixed to said weight (7).

9. Dispenser according to one of the preceding claims, **wherein** the first roller (3), after said sensor (5) is triggered, is arrested until a renewed turning.

## Revendications

1. Distributeur de feuilles en matière souple, notamment pour dessous-de-verre de bière de pis, petits napperons pour tasses de café, filtres à café ou autres objets analogues, essentiellement composé d'un réceptacle vertical (1) dans lequel on introduit la pile de feuilles (2) par le haut, les feuilles (2) reposant sur deux cylindres parallèles à surface rêche (3, 4), dont les axes sont fondamentalement horizontaux et entre lesquels se trouve un capteur (5). Le réceptacle (1) est doté d'une fente (9) radiale, orientée dans le sens de transport des feuilles (2), à la hauteur de la feuille reposant sur les cylindres (3, 4). Une barrière lumineuse située à l'extérieur, au niveau de la fente (9), détecte la feuille (2) qui sort de cette dernière ; les deux cylindres (3, 4) sont reliés à un mécanisme d'entraînement et à une commande. Ce distributeur est **caractérisé en ce que** la commande des cylindres (3, 4) fonctionne de telle sorte que le premier cylindre (3), le plus éloigné de la fente (9), tourne lorsque la barrière lumineuse est fermée et que la partie supérieure de sa surface tourne vers la fente et entraîne la feuille (2) qui repose dessus, et que le deuxième cylindre (4), le plus proche de la fente (9), reste immobile jusqu'à ce que la feuille (2) en bas de la pile touche le capteur (5) ; le deuxième cylindre (4) commence alors à tourner dans le même sens que le premier cylindre (3) auparavant et stoppe le premier cylindre (3), jusqu'à ce que les deux cylindres (3, 4) s'immobilisent après une interruption de la barrière lumineuse.

2. Distributeur selon la revendication 1 ou 2, **caractérisé en ce qu'**un poids (7) repose sur les feuilles (2).

3. Distributeur selon la revendication 1 ou 2, **caractérisé en ce que** les deux cylindres (3, 4) sont entraînés par un mécanisme commun qui commute entre les deux cylindres (3, 4).

4. Distributeur selon l'une quelconque des revendications précédentes, **caractérisé en ce qu'**une colonnette (6) monte dès que le premier cylindre (3) a commencé à tourner, de préférence lorsque la feuille (2) touche le capteur (5), et soulève légèrement les feuilles (2) lorsqu'elle est arrivée en haut de sa course de sorte que celles-ci ne touchent plus le premier cylindre (3).

5. Distributeur selon la revendication 4, **caractérisé en ce que** l'extrémité de la colonnette (6) est pointue ou rêche.

6. Distributeur selon l'une des revendications précédentes, notamment pour dessous-de-verre de bière de pils, **caractérisé en ce qu'**il renferme une tige coaxiale au puits (1) et soit un capteur (5) large qui couvre l'ouverture centrale ou deux capteurs (5) dont l'un se trouve à proximité du premier cylindre (3) et l'autre à proximité du deuxième cylindre (4).

7. Distributeur selon l'une des revendications précédentes, notamment pour dessous-de-verre de bière de pis, **caractérisé en ce qu'**il renferme un fil de guidage, situé parallèlement à l'axe central de la pile, en face de la fente (9), qui entre dans l'incision des dessous-de-verre.

8. Distributeur selon la revendication 6 ou 7, **caractérisé en ce que** la tige est fixée au poids (7).

9. Distributeur selon la revendication 6 ou 7, **caractérisé en ce que** le premier cylindre (3) est bloqué jusqu'au prochain tour lorsque le capteur (5) a déclenché.
